# EUROPÄISCHE PATENTSCHRIFT

(11) **EP 1 766 336 B1**
(45) Veröffentlichungstag und Bekanntmachung des Hinweises auf die Patenterteilung: **03.04.2019**
(21) Anmeldenummer: 05760752.5
(22) Anmeldetag: 01.07.2005
(51) Int. Cl.: G01D 11/24, F02P 17/12

(54) **MESSVORRICHTUNG**
MEASURING DEVICE
DISPOSITIF DE MESURE

(30) Priorität: 06.07.2004 DE 102004032540
(43) Veröffentlichungstag der Anmeldung: 28.03.2007
(73) Patentinhaber: ROBERT BOSCH GMBH, 70442 Stuttgart (DE)
(72) Erfinder: DITTMANN, Karl-Heinz, 73054 Eislingen (DE); BUMEN, Werner, 73230 Kirchheim (DE)
(86) Internationale Anmeldenummer: PCT/EP2005/053152
(87) Internationale Veröffentlichungsnummer: WO 2006/003188

(56) Entgegenhaltungen:
- EP-A- 0 230 084
- US-A- 4 004 213
- PATENT ABSTRACTS OF JAPAN Bd. 007, Nr. 160 (P-210), 14. Juli 1983 (1983-07-14) & JP 58 068661 A (KURARAY KK), 23. April 1983 (1983-04-23)

## Beschreibung

### Stand der Technik

Die vorliegende Erfindung betrifft eine Messvorrichtung zum Erfassen von Signalen, insbesondere an einer Zündanlage einer Brennkraftmaschine, mit einem Signalleiter und mit einer mit dem Signalleiter verbundenen Messelektrode zur Einkopplung eines zu erfassenden Signals in den Signalleiter.

Derartige Messvorrichtungen sind aus dem Stand der Technik bekannt und weisen den Nachteil auf, dass an unzugänglichen Stellen verbaute Zündspulen bzw. andere zu untersuchende Einrichtungen nur schwer bzw. gar nicht erreichbar sind. Daher ist oftmals ein zeitraubender Ausbau der zu untersuchenden Komponenten erforderlich, der die Kosten für eine Messung an derartigen Komponenten erhöht.

Aus dem Dokument US4004213 A ist ein Meßgerät zum Messen der Elektrodenabstandes einer Zündkerze bekannt. Das Meßgerät weist eine Sonde mit einem Gehäuse aus elektrisch isolierenden Material und ein leitendes Glied auf, das in dem Gehäuse fest angeordnet ist.

Demgemäß ist es Aufgabe der vorliegenden Erfindung, eine Messvorrichtung der eingangs genannten Art dahingehend zu verbessern, dass auch an unzugänglichen Stellen verbaute Komponenten einfach erreichbar sind bzw. nicht zur Messung
ausgebaut werden müssen, und dass die Messvorrichtung an viele verschiedene Einbausituationen und zu messende Komponenten anpassbar ist.

Diese Aufgabe wird bei der eingangs beschriebenen Messvorrichtung erfindungsgemäß dadurch gelöst, dass eine flexible Spitze vorgesehen ist. Die flexible Spitze ermöglicht eine Anpassung der Messvorrichtung an die räumlichen Verhältnisse der zu messenden Komponenten bzw. des sie umgebenden Einbauraums. Darüber hinaus ermöglicht die erfindungsgemäße Messvorrichtung eine einfache und schnelle Anpassung der Messvorrichtung an die Form bzw. Größe der zu messenden Komponenten, so dass bei einem Wechsel zwischen mehreren verschiedenen Messobjekten allenfalls ein geringer Anpassungsaufwand erforderlich ist.

### Vorteile der Erfindung

Eine sehr vorteilhafte Ausführungsform der erfindungsgemäßen Messvorrichtung ist dadurch gekennzeichnet, dass die Spitze längenvariierbar ist.

Sehr vorteilhaft ist auch eine weitere Variante der vorliegenden Erfindung, bei der die Spitze modular aufgebaut ist. Der modulare Aufbau der Spitze ermöglicht eine noch flexiblere Anpassung der Messvorrichtung an das betreffende Messobjekt. Bei einer modular aufgebauten Spitze ist ebenfalls die Möglichkeit gegeben, die Länge der Spitze frei einzustellen, beispielsweise indem einzelne Module der Spitze je nach Bedarf hinzugefügt oder entfernt werden. Vorzugsweise wird die Länge der Spitze bereits bei der Herstellung vorgegeben, aber eine Änderung der Länge ist auch im Feld durchführbar.

Die erfindungsgemäße Messvorrichtung ist dadurch gekennzeichnet, dass die Spitze rohrförmige Segmente aufweist, wobei jeweils ein Ende eines Segments in ein anderes Ende eines anderen Segments schwenkbar eingesteckt ist. Durch diese Konstruktion ist eine maximale Flexibilität der Messvorrichtung bzw. der Spitze der Messvorrichtung gewährleistet bei gleichzeitig einfachem Aufbau.

Eine beispielhafte Ausbildung der rohrförmigen Segmente ist in der europäischen Patentanmeldung 0 167 063 A1 angegeben.

Entsprechende Handelsprodukte sind beispielsweise unter der Markenbezeichnung LOC-LINE der Firma Lockwood Products(vgl. http://www.loc-line.com, http://www.loc-line.de) bekannt. Diese rohrförmigen Segmente sind bisher beispielsweise zum Transport von Flüssigkeiten, z.B. von Kühlwasser bei Werkzeugmaschinen, bekannt und sind in unterschiedlichen Größen verfügbar.

Bevorzugt werden für die erfindungsgemäße Messvorrichtung Segmente mit einem Innendurchmesser von etwa ¼ Zoll eingesetzt, die beispielsweise aus einem Azetal-Copolymer hergestellt sind, eine maximal Anwendungstemperatur von ca. 76°C und einen Schmelzpunkt von ca. 165°C aufweisen. Eine weitere sehr vorteilhafte Ausführungsform der vorliegenden Erfindung ist dadurch gekennzeichnet, dass die Spitze als flexibler Schlauch ausgebildet ist.

Eine weitere sehr vorteilhaftes Merkmal der vorliegenden Erfindung ist dadurch gekennzeichnet, dass die Spitze auch in einem gekrümmten Zustand arretierbar ist. Dadurch behält die flexible Spitze der
Messvorrichtung eine eingestellte Krümmung auch bei Abwesenheit äußerer Kräfte bei. Bei der oben beschriebenen Ausbildung der Spitze in Form der rohrförmigen Segmente, z.B. gemäß der EP 0 167 063 A1, ist die erfindungsgemäße Arretierbarkeit bereits dadurch gegeben, dass sich die einzelnen rohrförmigen Segmente bei Abwesenheit äußerer Kräfte nicht gegeneinander verschieben, weil sie durch entsprechende Klemmkräfte zusammengehalten werden.

Ein ähnlicher Effekt ist bei einer Ausbildung der flexiblen Spitze der Messvorrichtung als flexibler Schlauch dadurch erreichbar, dass beispielsweise eine Metallfeder um den Schlauch angeordnet wird, die den Schlauch in einer vorgegebenen Krümmung hält.

Gemäß einer weiteren sehr vorteilhaften Ausführungsform der vorliegenden Erfindung ist die Messelektrode als kapazitiver Messwertgeber ausgebildet. In diesem Fall ist keine elektrisch leitende, das heißt, galvanische Verbindung zwischen einem Messobjekt und der Messelektrode erforderlich.

Die Messvorrichtung kann dann beispielsweise dazu verwendet werden, einen Zündspannungsverlauf einer Zündspule einer Brennkraftmaschine zu erfassen. Aufgrund der hohen Flexibilität der Messvorrichtung mit ihrer flexiblen Spitze kann die Messvorrichtung z.B. durch Biegen an die Messumgebung angepasst werden, so dass die zu untersuchende Zündspule für eine Messung nicht ausgebaut werden muss. Die Spitze der Messvorrichtung wird zur kapazitiven Erfassung des Zündspannungsverlaufes einfach an eine Oberfläche der Zündspule oder auch nur in deren Nähe gehalten.

Eine weitere vorteilhafte Variante der vorliegenden Erfindung ist dadurch gekennzeichnet, dass die Messelektrode eine vorzugsweise lösbar mit der Messelektrode verbundene Verschlusskappe aufweist.

Gemäß einer anderen sehr vorteilhaften Ausführungsform der vorliegenden Erfindung ist die Verschlusskappe farblich von der flexiblen Spitze der Messvorrichtung abgesetzt, um eine Handhabung der Messvorrichtung weiter zu erleichtern. Es ist auch denkbar, die Verschlusskappe mit anderen Markierungsmitteln, wie beispielsweise einer Beleuchtung zu versehen. Eine Beleuchtung kann auch an anderen Bereichen der Spitze vorgesehen sein.

Besonders vorteilhaft ist die Verschlusskappe gemäß einer weiteren Ausführungsform der vorliegenden Erfindung so ausgebildet, dass sie an eine hierfür vorgesehene Halterung an einem Messobjekt bzw. eine Zündspule anbringbar ist.

Eine weitere vorteilhafte Ausführungsform der erfindungsgemäßen Messvorrichtung sieht vor, dass der Signalleiter eine vorzugsweise einadrige abgeschirmte Leitung, insbesondere eine Koaxialleitung oder auch ein anderes Kabel wie z.B. ein Hochspannungskabel, aufweist.

Bei der Verwendung eines Koaxialkabels oder einer anderen abgeschirmten Leitung ist es auch möglich, den Außenleiter bzw. die Abschirmung im Bereich der Spitze teilweise zu entfernen, so dass zu erfassende Signale nicht nur im Bereich der Messelektrode sondern auch noch in einem Teil eines in der Spitze verlaufenden Innenleiters des Koaxialkabels einkoppeln können, wodurch eine effektive Koppelkapazität erhöht wird. Hiermit sind beispielsweise gleichzeitige Messungen an mehreren Zündspulen bzw. Messobjekten möglich, die ihr jeweiliges Signal in einen entsprechenden, nicht abgeschirmten Teil des Innenleiters bzw. des Signalleiters einkoppeln.

Gemäß einer weiteren vorteilhaften Ausführungsform der vorliegenden Erfindung weist die Messelektrode und/oder die Verschlusskappe und/oder die Spitze und/oder ein Haltegriff der Messvorrichtung Befestigungsmittel zur Befestigung mindestens eines Teils der Messvorrichtung auf. Dadurch kann die erfindungsgemäße Messvorrichtung ortsfest an dem Messobjekt positioniert werden, so dass ein Festhalten der Messvorrichtung während der Messung durch eine Bedienperson nicht erforderlich ist.

Eine andere vorteilhafte Ausführungsform der erfindungsgemäßen Messvorrichtung ist durch einen vorzugsweise kapazitiven Spannungsteiler gekennzeichnet, der ein mittels der Messelektrode in die Signalleitung eingekoppeltes Spannungssignal auf einen niedrigeren Spannungswert herunterteilt. Dieser Spannungsteiler kann beispielsweise in dem Haltegriff oder in einem Anschlußstecker der Messvorrichtung angeordnet sein.

Alternativ hierzu kann der Spannungsteiler auch in einem speziell dafür vorgesehenen Abschnitt der modular aufgebauten Spitze der Messvorrichtung vorgesehen sein, wobei entsprechende Anschlüsse für den Signalleiter an den Spannungsteiler vorzusehen sind.

Anstelle des kapazitiven Messwertgebers kann die Messelektrode auch als Kontaktspitze, d.h. zur galvanisch gekoppelten Erfassung von Signalen, ausgebildet sein.

Die Messvorrichtung kann an dem der Spitze abgewandten Ende des Signalleiters einen mehrpoligen Stecker aufweisen, mit dem der Signalleiter direkt z.B. an einen Diagnosetester für Kfz-Zündsysteme oder an andere Mess- bzw. Auswerteinrichtungen anschließbar ist.

Eine weitere sehr vorteilhafte Ausführungsform der erfindungsgemäßen Messvorrichtung ist dadurch gekennzeichnet, dass die Beleuchtung fremdversorgt ist, insbesondere durch ein separates Stromkabel oder mittels des Signalleiters, und/oder dass die Beleuchtung eine eigene Stromversorgung wie z.B. eine Batterie aufweist. Eine Verwendung der Messvorrichtung allein als Lampe ist ebenfalls denkbar.

### Zeichnungen

Weitere Vorteile und Einzelheiten der vorliegenden Erfindung sind in der folgenden Figurenbeschreibung unter Bezugnahme auf die Zeichnung angegeben, wobei
- Figur 1a: eine erste Ausführungsform der erfindungsgemäßen Messvorrichtung darstellt,
- Figur 1b: die Messvorrichtung aus Figur 1a in gekrümmtem Zustand zeigt,
- Figur 1c: eine vergrößerte Abbildung der Spitze der Messvorrichtung mit der Messelektrode darstellt, und
- Figur 2: eine schematische Darstellung der Messvorrichtung an einer Zündanlage zeigt.

### Beschreibung der Ausführungsbeispiele

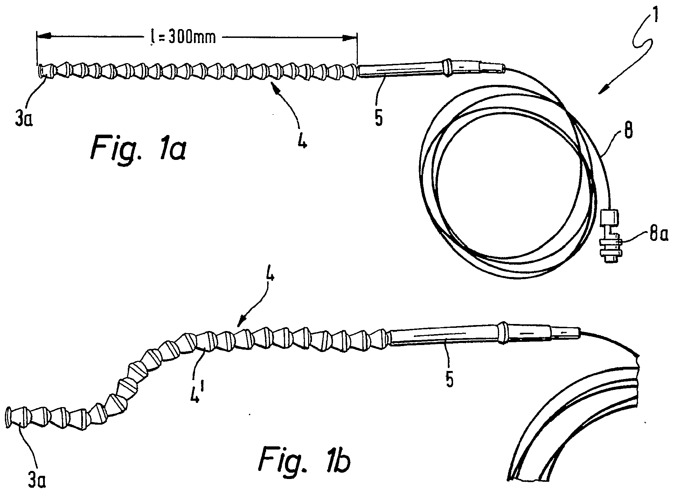

Figur 1a zeigt die erfindungsgemäße Messvorrichtung 1, die einen Handgriff 5 sowie eine an dem Handgriff 5 angebrachte Spitze 4 aufweist. Am Ende der 1=300mm langen Spitze 4 (links in Figur 1a) ist eine Verschlusskappe 3a angebracht.

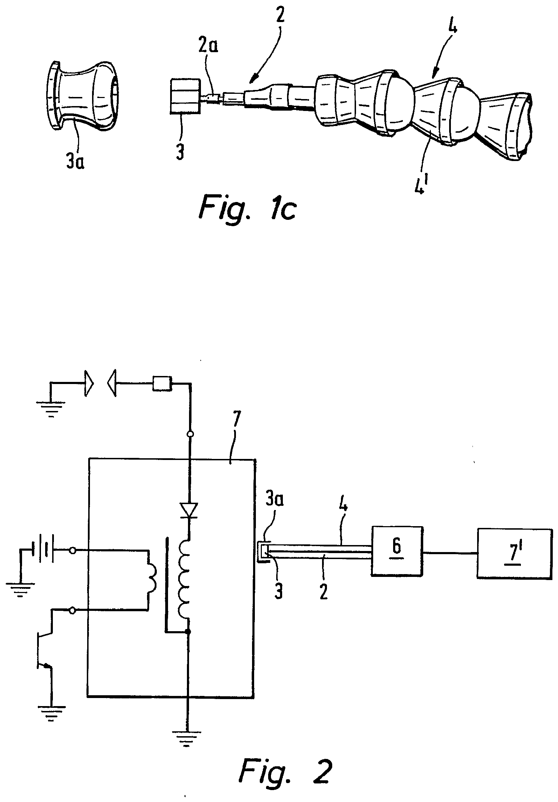

Des weiteren weist die Messvorrichtung 1 ein Kabel 8 auf sowie einen mehrpoligen Stecker 8a, der zur Verbindung des Kabels 8 mit einer Diagnose- bzw. Messeinrichtung vorgesehen ist. Die Messvorrichtung 1 kann mit dem Stecker 8a direkt an einen Diagnosetester 7' (vgl. Fig. 2) für Kfz-Zündanlagen angeschlossen werden.

Wie aus Figur 1b ersichtlich, lässt sich die flexible Spitze 4 der Messvorrichtung 1 nahezu beliebig formen, wobei die einzelnen rohrförmigen Segmente 4' der Spitze 4 gegeneinander verschwenkt werden. Eine genaue Beschreibung der Segmente 4' findet sich in der europäischen Patentanmeldung 0 167 063 A1.

Zur Einkopplung eines mittels der Messvorrichtung 1 zu erfassenden Signals in den in Figur 1c abgebildeten Signalleiter 2 ist bei der erfindungsgemäßen Messvorrichtung 1 eine Messelektrode 3 vorgesehen, die mit einem Innenleiter 2a des als Koaxialkabel ausgebildeten Signalleiters 2 verbunden ist. Das Kabel 8 stellt bei der vorliegenden Ausführungsform die Verlängerung des Signalleiters 2 dar.

Anstelle des Koaxialkabels 2 kann bei einer weiteren Ausführungsform der Messvorrichtung 1 auch ein Hochspannungskabel (nicht gezeigt) als Signalleiter 2 verwendet werden, welches z.B. einen Innenleiter aufweist, der in einem isolierenden Mantel geführt ist.

Zum Schutz der Messelektrode 3, die als kapazitiver Messwertgeber arbeitet, ist die Verschlusskappe 3a vorgesehen, die auf die Messelektrode 3 aufsteckbar und von dieser wieder lösbar ist. Ein einfaches Wechseln der Verschlusskappe 3a ist damit gewährleistet. Die Verschlusskappe 3a besteht vorzugsweise aus nichtleitendem Kunststoff.

Um eine Bedienung der erfindungsgemäßen Messvorrichtung 1 auch an unzugänglichen Messobjekten bzw. unter schlechten Sichtbedingungen zu erleichtern, ist die Farbe der Verschlusskappe 3a deutlich verschieden von der Farbe der restlichen Spitze 4 der Messvorrichtung 1. Beispielsweise weist die Verschlusskappe 3a eine signalrote Färbung auf.

Bei einer weiteren Ausführungsform der Messvorrichtung 1 kann durch eine definierte Wandstärke und Geometrie der Verschlusskappe 3a wie z.B. Kugelform sowie durch eine definierte Form der Messelektrode 3 die Einhaltung eines vorgebbaren Abstandes der Messelektrode 3 von einem Messobjekt (nicht gezeigt) beim Berühren desselben mit der Spitze der Messvorrichtung 1 bzw. mit der Verschlusskappe 3a selbst, bewirkt werden.

In Figur 2 ist eine schematische Schaltungsanordnung angegeben, die den Einsatz der Messvorrichtung 1 veranschaulicht. Als Messobjekt ist in Figur 2 eine Zündspule 7 dargestellt, an deren Oberfläche die durch die Verschlusskappe 3a geschützte Messelektrode 3 gehalten wird. Durch den geringen Abstand zwischen der Messelektrode 3 und der Zündspule 7 ist eine kapazitive Kopplung der Zündspule 7 mit der Messelektrode 3 gegeben, so dass eine Einkopplung von in der Zündspule 7 herrschenden elektrischen Feldern in das mit der Messelektrode 3 verbundene Koaxialkabel 2 bzw. dessen Innenleiter 2a (Fig. 1c) stattfindet. Das Koaxialkabel 2 ist dabei wie aus Figur 2 ersichtlich, innerhalb der durch die Segmente 4' (Fig. 1c) gebildeten Spitze 4 geführt.

In dem Handgriff 5 (Figur 1a) der Messvorrichtung 1 ist ein kapazitiver Spannungsteiler 6 (Figur 2) integriert, der eine Impedanztransformation vornimmt, bevor das erfasste Signal einer Diagnoseschaltung bzw. einem Diagnosetester 7' zugeführt wird. Die Verbindung zwischen dem kapazitiven Spannungsteiler 6 und dem Diagnosetester 7' ist hierbei über das Kabel 8 (Fig. 1a) realisiert.

Bei einer weiteren, nicht dargestellten Ausführungsform der vorliegenden Erfindung ist der kapazitive Spannungsteiler in dem Stecker 8a integriert.

Insgesamt ermöglicht die erfindungsgemäße Messvorrichtung 1 eine sehr flexible Erfassung von Signalen auch an unzugänglichen Stellen. Besonders vorteilhaft ist auch der mechanische Schutz des in der Spitze 4 integrierten Signalleiters 2 durch die Segmente 4' der Spitze 4.

Ferner kann durch den modularen Aufbau der Spitze 4 die erfindungsgemäße Messvorrichtung 1 an die unterschiedlichsten Raumverhältnisse bzw. Messobjekte angepasst werden. Im Falle der Verwendung des auch unter der Markenbezeichnung LOC-LINE bekannten Systems, das in der europäischen Patentanmeldung 0 167 063 beschrieben ist, ist aufgrund der Modularität der Segmente 4' eine sehr einfache Anpassung der Länge der Spitze 4 möglich. Vorzugsweise werden dabei Segmente 4' mit einem Innendurchmesser von 1/4 Zoll verwendet.

Die Messvorrichtung eignet sich insbesondere zur Messung an Zündanlagen von Kraftfahrzeugen, die oft an unzugänglichen Stellen angeordnet sind, aber auch für Messungen an anderen Einrichtungen.

Die Messvorrichtung 1 ist besonders geeignet zum schnellen Aufspüren von Signalen an Motoren mit mehreren Zündspulen, wobei im Rahmen einer Messung aufgrund der flexiblen Ausbildung der Spitze 4 vorteilhaft sehr schnell von einer Zündspule zur nächsten Zündspule gewechselt werden kann.

Besonders vorteilhaft weist die Messvorrichtung 1 Befestigungsmittel (nicht gezeigt) auf, die ein Festmachen der Messvorrichtung 1 am Messobjekt oder in dessen Nähe ermöglichen.

Gemäß einer weiteren Ausführungsform der Erfindung weist die Verschlusskappe 3a eine Beleuchtung (nicht gezeigt) auf, die über den Signalleiter 2 mit Strom versorgt wird. Hierzu ist beispielsweise in dem Stecker 8a eine Trennschaltung (nicht gezeigt) vorgesehen, die eingekoppelte, zu erfassende Signale von dem Gleichstrom zur Versorgung der Beleuchtung trennt.

Alternativ ist die Beleuchtung auch über ein ebenfalls nicht gezeigtes, separates Stromkabel versorgbar, das - wie der Signalleiter 2 - innerhalb der Spitze 4 oder außerhalb von dieser verlaufen kann. Bei einer weiteren Ausführungsform ist eine Batterie zur Versorgung der Beleuchtung vorgesehen.

Bei einer weiteren Ausführungsform der vorliegenden Erfindung ist der Innenleiter 2a zumindest über einen innerhalb der Spitze 4 verlaufenden Messabschnitt nicht von einem geerdeten Schutzleiter umgeben, so dass in diesen Messabschnitt, ebenso wie in die Messelektrode 3, Signale einkoppeln können. Der Messabschnitt kann sich ausgehend von der Messelektrode 3 (Fig. 1c) beispielsweise über 200mm der in Fig. 1a abgebildeten 1=300mm langen Spitze 4 erstrecken. Auf diese Weise können z.B. gleichzeitig die Signale von verschiedenen Zündspulen in den Innenleiter 2a eingekoppelt werden.

## Patentansprüche

1. Messvorrichtung (1) zum Erfassen von Signalen, insbesondere an einer Zündanlage einer Brennkraftmaschine, mit einem Signalleiter (2) und mit einer mit dem Signalleiter (2) verbundenen Messelektrode (3) zur Einkopplung eines zu erfassenden Signals in den Signalleiter (2), sowie einer flexible Spitze (4), **dadurch gekennzeichnet, dass** die Spitze (4) rohrförmige Segmente (4') aufweist, wobei jeweils ein Ende eines Segments (4') in ein anderes Ende eines anderen Segments (4') schwenkbar eingesteckt ist und die Spitze (4) vorzugsweise auch in einem gekrümmten Zustand arretierbar ist.

2. Messvorrichtung (1) nach Anspruch 1, **dadurch gekennzeichnet, dass** die Spitze (4) längenvariierbar ist.

3. Messvorrichtung (1) nach einem der vorstehenden Ansprüche, **dadurch gekennzeichnet, dass** die Spitze (4) modular aufgebaut ist.

4. Messvorrichtung (1) nach einem der vorstehenden Ansprüche, **dadurch gekennzeichnet, dass** die Spitze (4) als flexibler Schlauch ausgebildet ist

5. Messvorrichtung (1) nach einem der vorstehenden Ansprüche, **dadurch gekennzeichnet, dass** die Messelektrode (3) als kapazitiver Messwertgeber ausgebildet ist.

6. Messvorrichtung (1) nach einem der vorstehenden Ansprüche, **dadurch gekennzeichnet, dass** die Messelektrode (3) eine vorzugsweise lösbar mit der Messelektrode (3) verbundene Verschlusskappe (3a) aufweist.

7. Messvorrichtung (1) nach Anspruch 8, **dadurch gekennzeichnet, dass** die Verschlusskappe (3a) farblich von der Spitze (4) abgesetzt ist und/oder sonstige Markierungsmittel aufweist.

8. Messvorrichtung (1) nach einem der vorstehenden Ansprüche, **dadurch gekennzeichnet, dass** der Signalleiter (2) eine vorzugsweise einadrige abgeschirmte Leitung, insbesondere eine Koaxialleitung oder ein Hochspannungskabel aufweist.

9. Messvorrichtung (1) nach einem der vorstehenden Ansprüche, **dadurch gekennzeichnet, dass** die Messelektrode (3) und/oder die Verschlusskappe (3a) und/oder die Spitze (4) und/oder ein Haltegriff (5) Befestigungsmittel zur Befestigung mindestens eines Teils der Messvorrichtung (1) aufweisen.

10. Messvorrichtung (1) nach einem der vorstehenden Ansprüche, **dadurch gekennzeichnet, dass** ein vorzugsweise kapazitiver Spannungsteiler (6) vorgesehen ist.

11. Messvorrichtung (1) nach einem der vorstehenden Ansprüche, **dadurch gekennzeichnet, dass** die Spitze (4) und/oder die Verschlusskappe (3a) eine Beleuchtung aufweist.

12. Messvorrichtung (1) nach einem der vorstehenden Ansprüche, **dadurch gekennzeichnet, dass** die Beleuchtung fremdversorgt ist, insbesondere durch ein separates Stromkabel oder mittels des Signalleiters (2), und/oder eine eigene Stromversorgung aufweist.

## Claims

1. Measuring device (1) for detecting signals, in particular in an ignition system of an internal combustion engine, comprising a signal conductor (2) and comprising a measurement electrode (3), which is connected to the signal conductor (2), for coupling a signal which is to be detected into the signal conductor (2) and also comprising a flexible tip (4), **characterized in that** the tip (4) has tubular segments (4'), wherein in each case one end of a segment (4') is pivotably inserted into another end of another segment (4') and the tip (4) can preferably also be locked in a bent state.

2. Measuring device (1) according to Claim 1, **characterized in that** the length of the tip (4) is variable.

3. Measuring device (1) according to either of the preceding claims, **characterized in that** the tip (4) is of modular construction.

4. Measuring device (1) according to one of the preceding claims, **characterized in that** the tip (4) is in the form of a flexible hose.

5. Measuring device (1) according to one of the preceding claims, **characterized in that** the measurement electrode (3) is in the form of a capacitive measurement value transmitter.

6. Measuring device (1) according to one of the preceding claims, **characterized in that** the measurement electrode (3) has a closure cap (3a) which is preferably detachably connected to the measurement electrode (3).

7. Measuring device (1) according to Claim 8, **characterized in that** the closure cap (3a) is of contrasting colour in relation to the tip (4) and/or has other marking means.

8. Measuring device (1) according to one of the preceding claims, **characterized in that** the signal conductor (2) has a preferably single-core shielded line, in particular a coaxial line or a high-voltage cable.

9. Measuring device (1) according to one of the preceding claims, **characterized in that** the measurement electrode (3) and/or the closure cap (3a) and/or the tip (4) and/or a grip (5) have/has fastening means for fastening at least one portion of the measuring device (1).

10. Measuring device (1) according to one of the preceding claims, **characterized in that** a preferably capacitive voltage divider (6) is provided.

11. Measuring device (1) according to one of the preceding claims, **characterized in that** the tip (4) and/or the closure cap (3a) has a lighting system.

12. Measuring device (1) according to one of the preceding claims, **characterized in that** the lighting system is supplied with power externally, in particular by a separate power cable or by means of the signal conductor (2), and/or has its own power supply.

## Revendications

1. Dispositif de mesure (1) destiné à acquérir des signaux, en particulier au niveau d'un système d'allumage d'un moteur à combustion interne, comportant un conducteur de signaux (2) et une électrode de mesure (3), reliée au conducteur de signaux (2) et destinée à injecter un signal à acquérir dans le conducteur de signaux (2), ainsi qu'une pointe souple (4), **caractérisé en ce que** la pointe (4) comporte des segments tubulaires (4'), dans lequel une extrémité d'un segment (4') est insérée de manière pivotante dans une autre extrémité d'un autre segment (4') et **en ce que** la pointe (4) peut de préférence également être encliquetée dans in état incurvé.

2. Dispositif de mesure (1) selon la revendication 1, **caractérisé en ce que** la pointe (4) est réglable en longueur.

3. Dispositif de mesure (1) selon l'une des revendications précédentes, **caractérisé en ce que** la pointe (4) présente une structure modulaire.

4. Dispositif de mesure (1) selon l'une des revendications précédentes, **caractérisé en ce que** la pointe (4) est réalisée sous la forme d'un tube flexible.

5. Dispositif de mesure (1) selon l'une des revendications précédentes, **caractérisé en ce que** l'électrode de mesure (3) est réalisée sous la forme d'un capteur de valeur de mesure capacitif.

6. Dispositif de mesure (1) selon l'une des revendications précédentes, **caractérisé en ce que** l'électrode de mesure (3) comporte un capuchon de fermeture (3a) qui est de préférence relié de manière amovible à l'électrode de mesure (3).

7. Dispositif de mesure (1) selon la revendication 8, **caractérisé en ce que** le capuchon de fermeture (3a) présente une couleur contrastée par rapport à la pointe (4) et/ou présente d'autres moyens de marquage.

8. Dispositif de mesure (1) selon l'une des revendications précédentes, **caractérisé en ce que** le conducteur de signaux (2) comporte une ligne blindée, de préférence à un seul conducteur, en particulier une ligne coaxiale ou un câble haute tension.

9. Dispositif de mesure (1) selon l'une des revendications précédentes, **caractérisé en ce que** l'électrode de mesure (3) et/ou le capuchon de fermeture (3a) et/ou la pointe (4) et/ou une poignée (5) comporte/comportent des moyens de fixation permettant de fixer au moins une partie du dispositif de mesure (1).

10. Dispositif de mesure (1) selon l'une des revendications précédentes, **caractérisé en ce qu'**il est prévu un diviseur de tension (6) de préférence capacitif.

11. Dispositif de mesure (1) selon l'une des revendications précédentes, **caractérisé en ce que** la pointe (4) et/ou le capuchon de fermeture (3a) comporte/comportent un éclairage.

12. Dispositif de mesure (1) selon l'une des revendications précédentes, **caractérisé en ce que** l'éclairage est alimenté de l'extérieur, en particulier par un câble de courant séparé ou au moyen du conducteur de signaux (2), et/ou comporte sa propre alimentation électrique.
